# EUROPEAN PATENT SPECIFICATION

(11) **EP 3 337 601 B1**
(45) Date of publication and mention of the grant of the patent: **08.05.2019**
(21) Application number: 16756998.7
(22) Date of filing: 18.08.2016
(51) Int. Cl.: B01J 8/00

(54) **CONTAINING APPARATUS HAVING A DISCHARGE DEVICE TO REMOVE THE MATERIAL CONTAINED IN A CONTAINER IN A CONTROLLED MANNER**
AUFNAHMEVORRICHTUNG MITAUSGABEVORRICHTUNG ZUR ENTFERNUNG DES IN EINEM BEHÄLTER ENTHALTENEN MATERIALS AUF KONTROLLIERTE WEISE
APPAREIL DE RETENUE COMPORTANT UN DISPOSITIF DE DÉCHARGE POUR LE RETRAIT DE LA MATIÈRE CONTENUE DANS UN CONTENANT D'UNE MANIÈRE CONTRÔLÉE

(30) Priority: 20.08.2015 IT UB20153176
(43) Date of publication of application: 27.06.2018
(73) Proprietor: Danieli & C. Officine Meccaniche S.p.A., 33042 Buttrio (IT); HYL Technologies, S.A. de C.V., Nuevo Leon 66450 (MX)
(72) Inventor: POLONI, Alfredo, 34070 Fogliano Di Redipuglia (IT); DELLA NEGRA, Angelico, 33040 Povoletto (IT); PRIMAVERA, Alessandra, 33040 Faedis (IT); ZUGLIANO, Alberto, 33044 Manzano (IT); ALVAREZ VAZQUEZ, Eduardo, San Nicolas De Los Garza 66452 (MX); GARZA RODRIGUEZ, Gilberto, Monterrey 66890 (MX)
(74) Representative: Petraz, Gilberto Luigi
(86) International application number: PCT/EP2016/069588
(87) International publication number: WO 2017/029352

(56) References cited:
- WO-A1-2014/009336
- WO-A1-2014/013048
- JP-A- S58 202 031
- US-A- 1 539 333

## Description

### FIELD OF THE INVENTION

The present invention concerns a containing apparatus having a discharge device to remove, selectively and in a controlled manner, the granular material contained in a container, in particular but not only, a large-size vertical type container, that is, one able to contain inside it many tons of material, for example in the form of pellets of pre-reduced iron (DRI), or a cooler for the material produced.

Embodiments of the present invention are related to a discharge device to remove the material contained in a container in a controlled manner.

### BACKGROUND OF THE INVENTION

"Direct reduction" indicates a family of processes for the production of metal iron starting from mineral iron and performed at temperatures lower than those at which the components melt.

Some containers or vessels used in such processes belong to the class of vertical or shaft furnaces, normally up to a few tens of meters high and a few meters wide, operating at a pressure slightly above or equal to atmospheric pressure or even up to and more than 10 bar.

Some examples of vessels used are the reactor, in which the DRI is produced by circulating a reducing gas through a vertically mobile bed of particulate of mineral iron at a maximum temperature in the order of about 1,000°C, and the cooler, in which before being discharged the DRI is cooled to the desired temperature by introducing into the corresponding vessel cooling gas that removes heat from the particles of DRI. For a good yield in both processes, it is fundamental that all the material inside the vessels flows uniformly, from the top downward due to gravity: it is important, that is, that every particle of material remains inside the corresponding vessel for a similar period of time and is subjected to the same reactions.

One example of reactor is disclosed in WO-A-2014/013048, and comprises a container into which a rotary shaft is installed to pass through the internal cavity of the container where the DRI is contained.

Vessels of this type generally comprise two distinct parts. A first part, the upper part, is substantially cylindrical, and the process proper takes place inside it: reducing gas is introduced into the reactor, so that the reduction reactions of the iron oxides and the carburization of the reduced material occur, and cooling gas is introduced into the cooler, so that the material is cooled before it is transferred to the second part below. The second part of the vessel is generally shaped like a truncated cone, and its function is to convey the material toward a single exit point where the material is discharged in a controlled manner. However, the truncated cone part of the vessel, converging downward and called "cone", does not allow every particle of DRI to arrive at the exit in the same time. This zone, which for vessels having high productivity can exceed a height of about 20 meters, has at least the following disadvantages:
- from the process point of view (reduction-carburization for reactors and cooling for coolers) it is a "dead" zone, in that the process that has to take place in the vessel occurs in the first part above;
- it increases heat dispersion due to the high surface exposed;
- it constitutes a zone where problems may possibly develop in the descent of the material, with the risk of agglomerates forming and a consequent blockage of the flow due to an increase in conditions unfavorable to the descent which could occur in the cone. These possibilities are greatly feared by DRI producers due to the loss of production that ensues, and the damage that the vessel could suffer during the removal of the blockage;
- in this zone, problems may also arise in the descent of the hot discharged material because as the temperature increases so does the friction coefficient between the particles of DRI, and inside the cone the particles take on almost a plastic consistency, causing agglomerates which in the long term obstruct the passage;
- in the case of a cooler, the presence of the cone does not allow a homogeneous treatment of the DRI since the material at the center of the vessel tends to descend at a greater speed than that which is on the periphery, in contact with the cooler wall; but the peripheral material is the one which cools most inasmuch as it exchanges heat with the wall and is more affected by the cooling gases. Consequently, the material at the center of the vessel is cooled less than the peripheral one and also spends less time inside the vessel due to the greater speed of descent, thus entailing considerably different temperatures between the different particles of DRI discharged.

The elimination of the conical part has already been contemplated in some known solutions, such as for example those that provide that the DRI is discharged from a reactor using a series of screws. In these known solutions, no cone is provided to convey the material to the exit, but several screws, even more than ten, disposed cantilevered and radially in the container, which convey the material through an equal number of lateral discharge exits. The presence of a large number of exits for the material considerably complicates the immediate use or storage of the DRI. The horizontal transfer of the DRI by the screws has some critical aspects, such as for example packing by the screw blades. Moreover, the use of cantilevered screws makes it necessary to use very large shafts in order to support the weight of the member and all the material above it. Furthermore, the fact that the screws have a considerable length (from the external wall to the center of the vessel) implies strong forces to be taken into account, especially in the case of large vessels.

A container is also known provided with a central internal structure which defines an annular discharge section in which some valves are inserted, along the circumference, each one oscillating around its own axis, which discharge the material downward with oscillatory movements. This known solution has at least the following disadvantages: for example the positioning of the valves along the circumference makes the structure very complex and, what is more, the particular type of valve allows only an intermittent discharge which, especially for large sizes, is also not homogeneous on the radius of the vessel.

Therefore, all the solutions in the state of the art do not allow to discharge the material homogeneously along the whole discharge area. In particular, even if they have an optimum geometry, the screws are intrinsically able to discharge a greater quantity of material from the zone farthest from the discharge exit, and a smaller quantity from the zone nearest the discharge exit.

In the same way, the oscillating valves described above do not guarantee the homogeneous discharge of the material since the cavity of each valve is filled as soon as, with the rotatory movement of the valve in one direction, a gap is created between the cavity and the area where the material is discharged; the material that fills the cavity is therefore always derived from the innermost part of the discharge zone. This phenomenon is accentuated as the diameter of the vessel increases and entails a lack of homogeneity in the descent of the material and hence different particles of material remain inside the vessel for different times.

Other known solutions are disclosed in WO-A-2014/009336 and US-A-1.539.333 where feeding devices are provided with a rotary valve configured to transfer particles, in a measured way, from a container, through a outlet.

These proposed solutions however do not solve the problems of blockages of the material in the container or through the outlet.

The solution proposed in WO-A-2014/009336 is used for hot particles of polymeric material and therefore the temperatures of the latters are very low compared to the temperature of the particles contained in the container for DRI particles. Moreover, also the correlated problems of a blockage are totally different in polymeric material with respect to DRI particles where a blockage can lead to drastic effects. Furthermore, the feeding devices disclosed in WO-A-2014/009336 and US-A-1.539.333 cannot be installed in containers for DRI particles, due to their reduced dimensions. As stated above, the containers, where the present invention in applied, can exceed a height of about 20 meters and therefore the column of weight acting on the feeding device, and in particular on the rotary valve, damages the latter.

There is therefore the need to obtain a device that overcomes the above drawbacks.

One purpose of the present invention is to obtain a containing apparatus and device for the controlled discharge of granular material, such as for example DRI, contained inside a container or vessel, that allows a constant and uniform descent of the material toward a determinate exit, hence allowing each part of it to remain inside the container for the same period of time.

Another purpose of the present invention is to obtain a containing apparatus and device to discharge granular material, for example DRI, that prevents blockages of material along the descent path.

Another purpose of the present invention is to provide a containing apparatus and device to discharge granular material, for example DRI, which considerably limits any possible damage and the quantity of material blocked in the event of malfunctioning of an extractor member.

Another purpose of the present invention is to provide a containing apparatus and device to discharge granular material, for example DRI, which allows to considerably limit the height of the container and, in the case of a reactor, to limit the cooling of the material, promoting energy recovery in the subsequent melting phase.

The Applicants have devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purposes, a containing apparatus according to the present invention, which solves in a new and original way the technical problems of the state of the art, comprises a a container of material, for example of the granular type, in particular but not only DRI.

The container has at least a lateral wall that defines an internal cavity and is provided with at least two lateral apertures made on opposite sides with respect to a vertical plane passing through a longitudinal axis of the container.

The containing apparatus also includes a discharge device provided with at least a movement member having a rotary shaft inserted into the two lateral apertures of the lateral wall to pass through the internal cavity of the container in through manner. The rotary shaft is selectively rotatable in a determinate direction of rotation around its own axis of rotation, disposed transverse to the longitudinal axis of the container.

The movement member has also a plurality of blades mounted radially on the rotary shaft and defining corresponding containing cells having the function of temporarily containing the granular material in order to move it, due to the effect of the rotation of the rotary shaft in the determinate direction of rotation, from a zone of the internal cavity, disposed above the rotary shaft, toward a discharge aperture of the container disposed below the rotary shaft. A movement member of this type is also called a rotary valve.

According to another feature of the present invention the rotary shaft comprises at least two axial zones adjacent to each other along its axis of rotation, and in each of the axial zones there is a specific plurality of said blades that defines a corresponding wheel with blades.

In this way, it is possible to obtain a containing apparatus particularly suitable for containers of high dimensions, such as high diameters. The wheels with blades can be chose, connected to each other, and therefore adapted on each occasion as a function of the dimension of the container. In particular, the number of wheel with blades can be chose in relation of the length of the rotary shaft.

Furthermore, the wheels with blade can be positioned, with respect to each other and to the rotary shaft, according to particular configurations adapted to generate continuous flows of material through the container and to avoid blockages.

According to a further embodiment of the present invention, the blades of each wheel are angularly staggered with respect to the blades of an adjacent wheel, to guarantee a continuous accumulation of the material in the containing cells and to facilitate the descent of the material in the container.

The angularly staggered disposition of the wheels allow a lack of sync of loading and discharge of the containing cells of adjacent wheels. Therefore the loading and discharge of the containing cells of two adjacent wheels occur in different times avoiding blockages both in the upper part an the lower part of rotary shaft.

According to one embodiment of the present invention, the movement member has a maximum transverse size, that is, perpendicular to the axis of rotation of the rotary shaft, for example the external diameter of the blades, which is less than the transverse size of the internal cavity of the container in correspondence with the two lateral apertures.

According to other embodiments of the present invention, the number of the axial zones of the rotary shaft, which corresponds to the number of the wheels, is comprised between 3 and 10.

According to another embodiment of the present invention, the rotary shaft has a substantially cylindrical shape and the radial size of the blades is constant, so that the containing cells are all the same.

According to a variant, the rotary shaft has a cross section that varies along its axis of rotation so that, given the same radial size of the blades, the containing cells have different volumes along the axis of rotation of the rotary shaft.

According to another embodiment of the present invention, at least two movement members are provided for the material, each having a rotary shaft inserted into two corresponding lateral apertures in order to pass through the internal cavity of the container in a through manner, the axis of rotation of the rotary shaft being coplanar and parallel to each other.

According to another embodiment of the present invention, at least a conveyor plate is disposed above the space that divides two adjacent movement members.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a lateral and sectioned view of a containing apparatus according to the present invention;
- fig. 2 is a section from II to II of fig. 1;
- fig. 3 is a view from above, schematized and partly sectioned, of fig. 1;
- fig. 4 is an enlarged detail of fig. 1;
- fig. 5 is a section from V to V of fig. 4;
- fig. 6 is a schematic representation of the angular phasing of the different wheels of the discharge device according to the present invention.

### DETAILED DESCRIPTION OF ONE EMBODIMENT

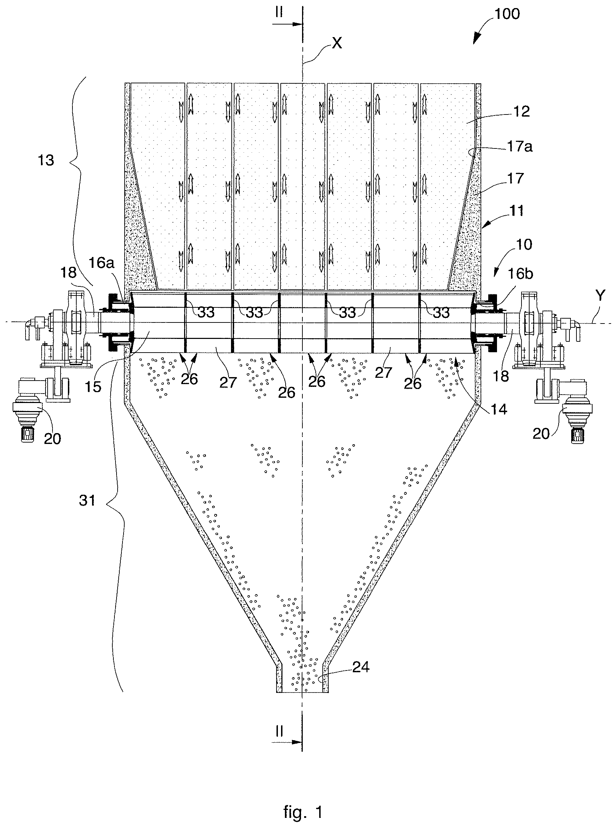

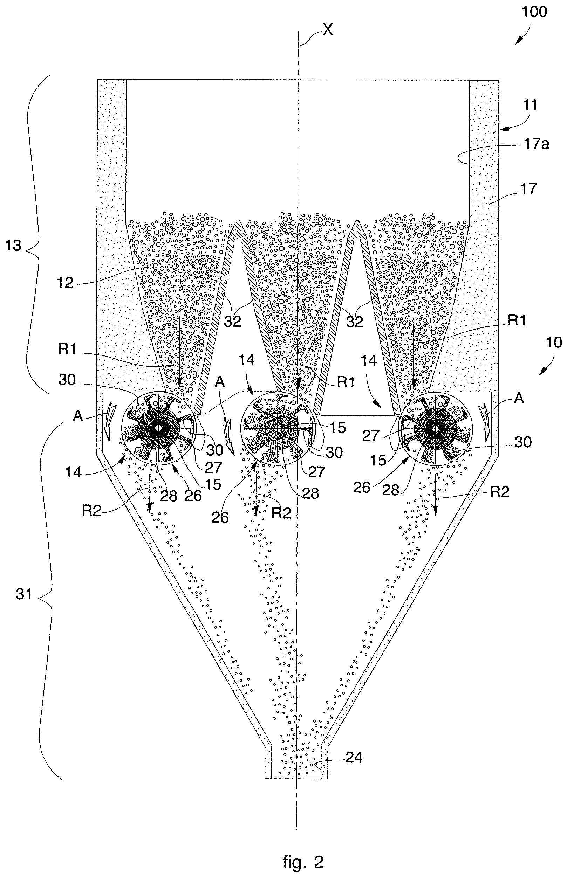

With reference to figs. 1 and 2, a containing apparatus 100, according to the present invention comprises a container 11 and a discharged device 10 to discharge material 12 from the container 11.

In particular, the discharge device 10 according to the present invention is installed in the lower part of the container 11 of material 12, consisting for example of granules or pellets of pre-reduced iron, that is, DRI.

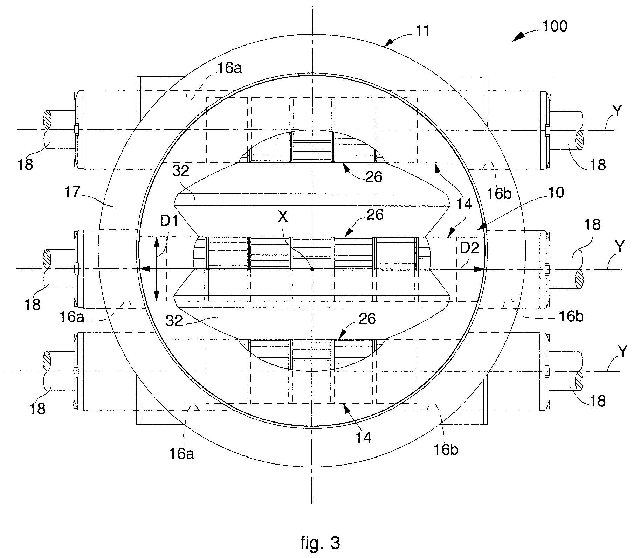

The container 11 comprises a lateral wall 17 which defines an internal cavity 17a, and is provided with three pairs of apertures 16a, 16b (fig.3), each made on opposite sides with respect to a vertical plane P passing through a longitudinal axis X of the container 11.

In this specific case, for convenience of description and merely by way of example, the container 11 has a circular cross section, but it could have a different cross section, for example oval or polygonal.

The discharge device 10 is positioned under an active processing zone 13 (figs. 1 and 2) of the cavity 17a. The active processing zone 13 in the case of a direct reduction reactor means the reduction zone proper, in which, in a known manner, the reduction reactions occur of the minerals containing iron by means of hot, pressurized reducer fluids, while in the case of a cooler it means the cooling zone where the required temperature is reached.

The discharge device 10 comprises three movement members 14 disposed below the active processing zone 13. Each movement member 14 comprises a rotary shaft 15 rotatable around its axis of rotation Y, transverse to the longitudinal axis X, in a determinate direction of rotation, clockwise or anti-clockwise. In this case, the central movement member 14 and the one on its left in fig. 2 turn anti-clockwise, while the one farthest to the right turns clockwise.

According to a simplified variant, not shown in the drawings but easily understood by any person of skill in the art, there may be only two movement members 14 instead of three. In this case, the movement members 14 turn in opposite directions with respect to each other.

In this case, the axes of rotation Y are parallel to each other and lie on a plane perpendicular to the longitudinal axis X, or slightly inclined with respect to it. Furthermore, the distance between two axes of rotation Y is chosen as a function of the space to be defined between two adjacent movement members 14. In the example shown here, the two spaces defined by the three movement members 14 are different from each other (figs. 2 and 3).

Each rotary shaft 15 is inserted into the respective two apertures 16a and 16b so as to be through, that is, they pass through the cavity 17a of the container 11 from one side to the other.

Furthermore, each movement member 14 has a maximum transverse size D1 (fig. 3), perpendicular to the axis of rotation Y of the rotary shaft 15, which is preferably less than the transverse size D2 of the internal cavity 17a in correspondence with the corresponding pair of lateral apertures 16a and 16b. In the example given here, the size D1 is less than one fourth of size D2.

The two ends 18 of each rotary shaft 15 are thus outside the container 11 and are connected, by means of transmission members of a known type, to two motors 20 with the function of making each rotary shaft 15 selectively rotate.

In a simplified variant of the present invention, not shown in the drawings, only one motor 20 is provided for each rotary shaft 15.

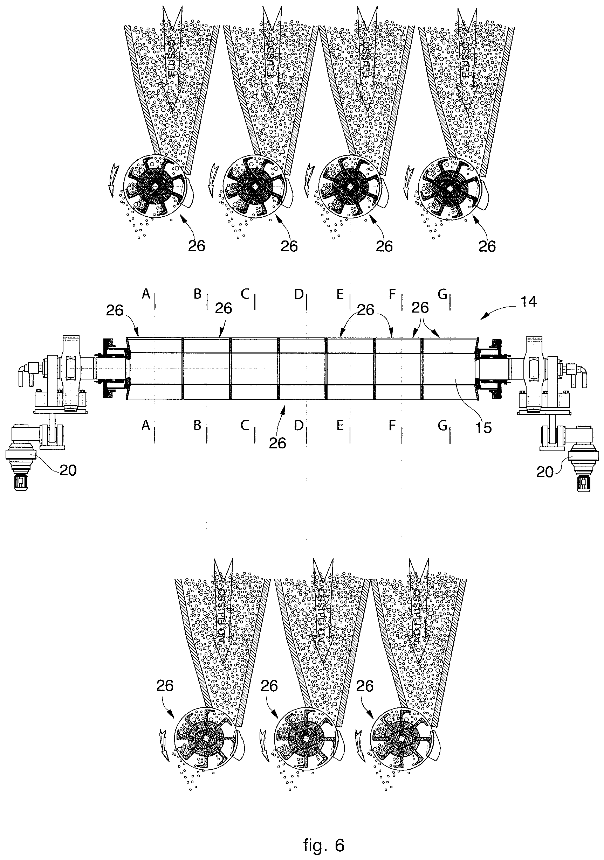

The rotary shaft 15 is divided into a plurality of axial zones, in the case shown here seven, identified by the letters A, B, C, D, E, F and G in fig. 6, on each of which a wheel 26 with blades is keyed.

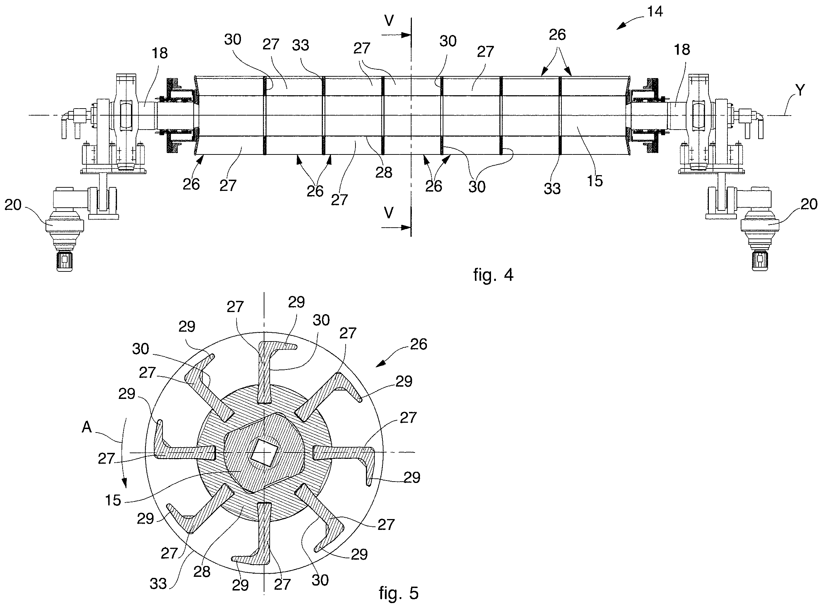

Each wheel 26 comprises a plurality of blades 27 (figs. 2 and 5), for example eight, which branch off radially from a central body 28, hollow inside and having a shape mating with that of the rotary shaft 15, to allow the body 28 to be positioned on the rotary shaft 15. The blades 27 are angularly equidistant from each other.

According to a variant, not shown in the drawings, the blades 27 can be attached, for example by welding, directly on the rotary shaft 15, without the central body 28 being interposed.

Each blade 27 has a hooked end 29 (fig. 5), the protruding part of which projects out tangentially in the opposite direction to the direction of rotation of the rotary shaft 15.

The wheels 26 are positioned along the axis of rotation Y so as to be adjacent with each other and in succession, so that the blades 27 advantageously cover the whole zone that goes from one side to the other of the internal cavity 17a.

Each pair of successive blades 27 delimits a containing seating or cell 30, with the function of containing the material 12 during the movement made by the movement member 14.

Between each pair of adjacent wheels 26 a separator disc 33 is disposed (fig. 1), configured so as to prevent the material 12 from passing from one of the wheels 26 to the other.

Each rotary shaft 15 can be either cylindrical, to define containing cells 30 that are substantially all the same along the axis of rotation Y, or conical, or with a variable cross section, to define containing cells 30 that have different volumes along the axis of rotation Y.

Furthermore, in a radial direction, two wheels 26 adjacent and contiguous along the rotary shaft 15 can advantageously be staggered with respect to each other by an angle comprised between 5° and 45°, to guarantee a continuous accumulation of the material in the containing cells 30 and to facilitate the descent of the material 12 in the container 11.

In the example given here, the wheels 26 of a first group, disposed in correspondence with the axial zones A, C, E and G (fig. 6) of the rotary shaft 15 have the same angular phasing, while the wheels 26 of a second group disposed in correspondence with the axial zones B, D and F are staggered by the same angle with respect to those of the first group.

The misalignment of the blades 27 of two adjacent wheels 26 allows to have instantaneous speeds in the container that are different from the corresponding and overlying adjacent columns of material: as shown in fig. 6, each wheel 26 receives the material, thus making the overlying column descend, in an angular sector of the wheel 26, that is different from the adjacent wheels 26. The material 12 in the container 11 is then made to descend in an instantaneous nonhomogeneous manner so as to create a shearing effect on the stream, which advantageously prevents the formation of agglomerates and bridges, but in an overall homogeneous manner so as to ensure an orderly descent of the material. In this way a correct flow of the material is obtained over the whole length of each movement member 14.

The same fluidity in the descent of the stream is guaranteed in the direction perpendicular to the movement members 14: to create the same shearing effect and thus to discourage the agglomeration of the material, it is expedient to stagger the wheels 26 so as to organize in time the filling of the containing cells 30 of the successive wheels 26, as shown in fig. 2.

The particles of material, moving vertically due to gravity, are guided toward the movement members 14 by the lateral wall 17 and by several conveyor plates 32, designed with the most suitable inclination for the material and the temperatures involved. In the embodiment shown here, two conveyor plates 32 are provided, disposed respectively above each of the two spaces that divide the three movement members 14, in order to convey the material 12, in conjunction with the lateral wall 17, toward the movement members 14 and thus facilitate the entrance of the individual particles of material 12 into the containing cells 30, preventing any particles from following different paths and therefore guaranteeing that all the material reaches the exit members and is processed in the same way. This makes filling the containing cells 30 more effective and consequently makes the movement caused by the discharge device 10 more efficient.

The discharge device 10 is thus able to transfer, in a controlled manner, a determinate quantity of material 12 from the end part of the active processing zone 13 of the container to a discharge zone 31 below, shaped like a truncated cone and converging downward.

The discharge device 10 divides the internal cavity 17a into the above-disclosed active processing zone 13 and the discharge zone 31, and defines a controlled discharge of the material from the active processing zone 13 to the discharge zone 31.

In the lower part of the discharge zone 31, substantially on the bottom of the container 11, there is a discharge aperture 24, from which the material 12 is able to exit the container 11 to be delivered, in a known manner, for example by a pneumatic, gravitational or mechanical feed system, to a user device downstream, such as for example a melting furnace.

In particular, this movement confers on the material 12 a trajectory that comprises a first segment, substantially rectilinear and parallel to the longitudinal axis X of the container 11, indicated by the arrows R1 in fig. 2, a second arched segment, in the direction of rotation indicated by the arrows A and determined by the rotation of the containing cells 30, and a third segment, indicated by the arrows R2, also substantially rectilinear and parallel to the longitudinal axis X, inside the discharge zone 31 and comprised between the movement members 14 and the discharge aperture 24.

The quantity of material 12 moved by each movement member 14 is defined by the product of the volume of the containing cells 30 filled by the material 12, which is known, and the speed of rotation of the rotary shafts 15, selectively adjustable by means of the motors 20 according to specific requirements.

This allows to adjust the discharge and regulate the stream of material 12 in its passage from the end part of the active zone of the container 11 to the discharge zone 31, in order to obtain a substantially homogeneous processing of the material 12 in its entirety.

The particular shape and division of each movement member 14 allows to pick up material 12 continuously from the active processing zone 13, preventing the formation of agglomerates which could impede the stream of material 12 and damage the container 11.

Furthermore, the discharge device 10 as described heretofore not only eliminates the risks of harmful agglomerates forming, but also allows to reduce the height of the discharge zone 31 compared with known containers. In fact, in known containers the discharge zone must necessarily have a great height, even more than 10 m, since it has to perform the function of regularizing the flow of granular material arriving from the active processing zone 13 above.

It is clear that modifications and/or additions of parts may be made to the containing apparatus 100 and the discharge device 10 as described heretofore, without departing from the field and scope of the present invention.

It is also clear that, although the present invention has been described with reference to a specific example, a person of skill in the art shall certainly be able to achieve many other equivalent forms of containing apparatus 100 and discharge device 10 for pressurized containers 11, having the characteristics as set forth in the claims and hence all coming within the field of protection defined thereby.

## Claims

1. Containing apparatus comprising:
- a container (11) of material (12) having at least one lateral wall (17) that defines an internal cavity (17a) and provided with at least two lateral apertures (16a, 16b) made on opposite sides with respect to a vertical plane (P) passing through a longitudinal axis (X) of said container (11), and
- a discharge device (10) provided with at least a movement member (14) having a rotary shaft (15) inserted into said two lateral apertures (16a, 16b) to pass through said internal cavity (17a) of said container (11) in through manner, and selectively rotatable in a determinate direction of rotation around its own axis of rotation (Y) transverse to said longitudinal axis (X), and a plurality of blades (27) mounted radially on said rotary shaft (15) and defining corresponding containing cells (30) having the function of temporarily containing said material (12) in order to move it, due to the effect of the rotation of said rotary shaft (15) in said determinate direction of rotation, from a zone of said internal cavity (17a), disposed above said rotary shaft (15), toward a discharge aperture (24) of said container (11) disposed below said rotary shaft (15), wherein said rotary shaft (15) is divided into a plurality of axial zones (A, B, C, D, E, F, G) along said axis of rotation (Y), and wherein on each of said axial zones (A, B, C, D, E, F, G) a corresponding wheel (26) with blades (27) is keyed, **characterized in that** said wheels (26) are positioned along said axis of rotation (Y) so as to be adjacent with each other and in succession, said blades (27) covering the whole zone comprised between one side to the other of said internal cavity (17a), **and in that** between each pair of adjacent wheels (26) a separator disc (33) is disposed, configured to prevent said material (12) from passing from one of said wheels (26) to the other.

2. Containing apparatus as in claim 1, **characterized in that** the blades (27) of each wheel (26) are angularly staggered with respect to the blades (27) of an adjacent wheel (26), to guarantee a continuous accumulation of the material in said containing cells (30) and to facilitate the descent of said material (12) in the container (11).

3. Containing apparatus as in any claim hereinbefore, **characterized in that** said blades (27), of each wheel (26), are angularly equidistant with respect to each other.

4. Containing apparatus as in any claim hereinbefore, **characterized in that** said movement member (14) has a maximum transverse size (D1), perpendicular to said axis of rotation (Y) of said rotary shaft (15), which is less than the transverse size (D2) of said internal cavity (17a) in correspondence with said two lateral apertures (16a and 16b).

5. Containing apparatus as in claim 4, **characterized in that** said maximum transverse size (D1) of said movement member (14) is less than a fourth of the transverse size (D2) of said internal cavity (17a) in correspondence with said two lateral apertures (16a, 16b).

6. Containing apparatus as in any claim hereinbefore, **characterized in that** the number of said axial zones (A, B, C, D, E, F, G) of said rotary shaft (15), which corresponds to the number of the wheels (26), is comprised between 3 and 10.

7. Containing apparatus as in any claim hereinbefore, **characterized in that** in each wheel (26), said blades (27) branch off radially from a central body (28) coupled coaxially with said rotary shaft (15).

8. Containing apparatus as any claim hereinbefore, **characterized in that** each of said blades (27) comprises a hooked end (29), having a protruding part which projects tangentially in the opposite direction to said determinate direction of rotation of said rotary shaft (15).

9. Containing apparatus as in any claim hereinbefore, **characterized in that** said rotary shaft (15) is substantially cylindrical in shape and the radial size of said blades (27) is constant, so that said containing cells (30) are all the same.

10. Containing apparatus as in any claim from 1 to 8, **characterized in that** said rotary shaft (15) has a cross section that varies along said axis of rotation (Y), so that, given the same radial size of said blades (27), said containing cells (30) have different volumes from each other along said axis of rotation (Y).

11. Containing apparatus as in any claim hereinbefore, **characterized in that** it comprises at least two movement members (14), each having a respective rotary shaft (15), each of said rotary shafts (15) being inserted into respective lateral apertures (16a, 16b) so as to pass through said internal cavity (17a) of said container (11) in through manner, **and in that** the axis of rotation (Y) of said rotary shafts (15) of said at least two movement members (14) are coplanar and parallel to each other.

12. Containing apparatus as in claim 11, **characterized in that** at least one conveyor plate (32) is disposed above each of the spaces that divide said at least two movement members (14).

13. Containing apparatus as in any claim hereinbefore, **characterized in that** said container (11) is a direct reduction reactor.

14. Containing apparatus as in any claim from 1 to 12, **characterized in that** said container (11) is a cooler.

## Patentansprüche

1. Behältervorrichtung mit:
- einem Behälter (11) für Material (12) mit wenigstens einer Seitenwand (17), welche einen inneren Hohlraum (17a) definiert, und mit wenigstens zwei seitlichen Öffnungen (16a, 16b), welche bezüglich einer vertikalen Ebene (P), die durch eine Längsachse (X) des Behälters (11) verläuft, entgegengesetzt angeordnet sind;
- einer Entleervorrichtung (10) mit wenigstens einem Bewegeelement (14), welches einen Drehschaft (15) umfasst, welcher in die beiden seitlichen Öffnungen (16a, 16b) eingelassen ist, um durch den inneren Hohlraum (17a) des Behälters (11) hindurch zu verlaufen, und welcher in einer vorbestimmten Drehrichtung um seine eigene Drehachse (Y), die transversal zu der Längsachse (X) ist, selektiv drehbar ist, sowie mit mehreren Klingen (27), die radial auf dem Drehschaft (15) gelagert sind und entsprechende Behälterzellen (30) definieren, welche die Funktionalität eines zeitweisen Aufnehmens des Materials (12) zum Bewegen des Materials aufgrund der Drehung des Drehschafts (15) in der vorbestimmten Drehrichtung von einem Bereich des inneren Hohlraums (17a) oberhalb des Drehschafts (15) zu einer Entleeröffnung (24) des Behälters (11) unterhalb des Drehschafts (15) aufweisen, wobei der Drehschaft (15) in mehrere axiale Bereiche (A, B, C, D, E, F, G) entlang der Drehachse (Y) aufgeteilt ist und wobei in jeder der axialen Bereiche (A, B, C, D, E, F, G) ein entsprechendes Rad (26) mit Klingen (27) angeordnet ist;
**dadurch gekennzeichnet, dass** die Räder (26) entlang der Drehachse (Y) angeordnet sind, sodass sie einander benachbart sind und aufeinander folgen, wobei die Klingen (27) den gesamten Bereich zwischen einer Seite und einer anderen Seite des inneren Hohlraums (17a) abdecken, wobei zwischen jedem Paar benachbarter Räder (26) eine Trennscheibe (33) angeordnet ist, welche dazu eingerichtet ist, das Material (12) daran zu hindern, sich von einem der Räder (26) zu einem anderen zu bewegen.

2. Behältervorrichtung nach Anspruch 1, **dadurch gekennzeichnet, dass** die Klingen (27) jedes Rades (26) bezüglich der Klingen (27) eines benachbarten Rades (26) winkelmäßig gestaffelt sind, um eine kontinuierliche Anreicherung des Materials in den Behälterzellen (30) sicherzustellen und ein Absinken des Materials (12) in dem Behälter (11) zu vereinfachen.

3. Behältervorrichtung nach einem der vorangehenden Ansprüche, **dadurch gekennzeichnet, dass** die Klingen (27) jedes Rades (26) denselben Winkelabstand aufweisen.

4. Behältervorrichtung nach einem der vorangehenden Ansprüche, **dadurch gekennzeichnet, dass** das Bewegeelement (14) eine maximale Querausdehnung (D1) senkrecht zu der Drehachse (Y) des Drehschafts (15) aufweist, die kleiner ist als die Querausdehnung (D2) des inneren Hohlraums (17a) bezüglich der beiden seitlichen Öffnungen (16a, 16b).

5. Behältervorrichtung gemäß Anspruch 4, **dadurch gekennzeichnet, dass** die maximale Querausdehnung (D1) des Bewegeelements (14) kleiner als ein Viertel der Querausdehnung (D2) des inneren Hohlraums (17a) bezüglich der beiden seitlichen Öffnungen (16a, 16b) beträgt.

6. Behältervorrichtung nach einem der vorangehenden Ansprüche, **dadurch gekennzeichnet, dass** die Anzahl der axialen Bereiche (A, B, C, D, E, F, G) des Drehschafts (15), welche der Anzahl der Räder (26) entspricht, zwischen 3 und 10 liegt.

7. Behältervorrichtung nach einem der vorangehenden Ansprüche, **dadurch gekennzeichnet, dass** in jedem Rad (26) die Klingen (27) sich radial von einem Zentralkörper (28), der koaxial mit dem Drehschaft (15) verbunden ist, verzweigen.

8. Behältervorrichtung nach einem der vorangehenden Ansprüche, **dadurch gekennzeichnet, dass** jede der Klingen (27) ein Hakenende (29) umfasst, welches ein vorstehendes Element umfasst, das tangential in eine gegenüber der vorbestimmten Drehrichtung des Drehschafts (15) entgegengesetzte Richtung vorkragt.

9. Behältervorrichtung nach einem der vorangehenden Ansprüche, **dadurch gekennzeichnet, dass** der Drehschaft (15) im wesentlichen zylinderförmigen ist und eine Radialausdehnung der Klingen (27) konstant ist, sodass die Behälterzellen (30) gleich sind.

10. Behältervorrichtung nach einem der Ansprüche 1 bis 8, **dadurch gekennzeichnet, dass** der Drehschaft (15) einen Querschnitt aufweist, der entlang der Drehachse (Y) variiert, sodass bei gleicher radialer Ausdehnung der Klingen (27) die Behälterzellen (30) entlang der Drehachse (Y) unterschiedliche Volumina aufweisen.

11. Behältervorrichtung nach einem der vorangehenden Ansprüche, **dadurch gekennzeichnet, dass** die Behältervorrichtung wenigstens zwei Bewegeelemente (14) umfasst, welche jeweils einen Drehschaft (15) aufweisen, wobei jeder der Drehschäfte (15) in entsprechende seitliche Öffnungen (16 a, 16 b) eingelassen ist, sodass sie durch den inneren Hohlraum (17 a) des Behälters (11) hindurch verlaufen, wobei die Drehachse (Y) der Drehschäfte (15) jeder der beiden Bewegeelemente (14) koplanar und zueinander parallel sind.

12. Behältervorrichtung nach Anspruch 11, **dadurch gekennzeichnet, dass** wenigstens eine Förderplatte (32) über jedem der Räume, die die wenigstens zwei Bewegeelemente (14) trennen, angeordnet ist.

13. Behältervorrichtung nach einem der vorangehenden Ansprüche, **dadurch gekennzeichnet, dass** der Behälter (11) ein Direktreduktionsreaktor ist.

14. Behältervorrichtung nach einem der Ansprüche 1 bis 12, **dadurch gekennzeichnet, dass** der Behälter (11) eine Kühlvorrichtung ist.

## Revendications

1. Appareil de confinement comprenant :
- un récipient (11) en un matériau (12) ayant au moins une paroi latérale (17) qui définit une cavité interne (17a) et pourvu d'au moins deux ouvertures latérales (16a, 16b) pratiquées sur des côtés opposés par rapport à un plan vertical (P) passant par un axe longitudinal (X) dudit récipient (11), et
- un dispositif de décharge (10) pourvu d'au moins un élément de déplacement (14) comportant un arbre rotatif (15) inséré dans lesdites deux ouvertures latérales (16a, 16b) pour passer à travers ladite cavité interne (17a) dudit récipient (11) de manière traversante, et pouvant tourner sélectivement dans une direction de rotation déterminée autour de son propre axe de rotation (Y) transversal audit axe longitudinal (X), et une pluralité d'aubes (27) montées radialement sur ledit arbre rotatif (15) et définissant des cellules de confinement correspondantes (30) ayant pour fonction de confiner temporairement ledit matériau (12) afin de le déplacer, sous l'effet de la rotation de ledit arbre rotatif (15) dans ladite direction de rotation déterminée, à partir d'une zone de ladite cavité interne (17a), disposée au-dessus dudit arbre rotatif (15), en direction d'une ouverture de décharge (24) dudit récipient (11) disposée au-dessous dudit organe rotatif arbre (15), dans lequel ledit arbre rotatif (15) est divisé en une pluralité de zones axiales (A, B, C, D, E, F, G) le long dudit axe de rotation (Y), et dans lequel sur chacune desdites zones axiales (A, B, C, D, E, F, G) est clavetée une roue correspondante (26) munie d'aubes (27), **caractérisé en ce que** lesdites roues (26) sont positionnées le long dudit axe de rotation (Y) de manière à être adjacentes les unes aux autres et à la suite, lesdites aubes (27) recouvrant la totalité de la zone comprise d'un côté à l'autre de ladite cavité interne (17a), et **en ce qu'**entre chaque paire de roues adjacentes (26) est disposé un disque séparateur (33), configuré pour empêcher ledit matériau (12) de passer d'une desdites roues (26) à l'autre.

2. Appareil de confinement selon la revendication 1, **caractérisé en ce que** les aubes (27) de chaque roue (26) sont étagées angulairement par rapport aux aubes (27) d'une roue adjacente (26), afin de garantir une accumulation continue du matériau dans lesdites cellules de confinement (30) et pour faciliter la descente dudit matériau (12) dans le récipient (11).

3. Appareil de confinement selon l'une quelconque des revendications précédentes, **caractérisé en ce que** lesdites aubes (27) de chaque roue (26) sont angulairement équidistantes les unes par rapport aux autres.

4. Appareil de confinement selon l'une quelconque des revendications précédentes, **caractérisé en ce que** ledit élément de déplacement (14) a une taille transversale maximum (D1), perpendiculaire audit axe de rotation (Y) dudit arbre rotatif (15), qui est inférieure à la taille transversale (D2) de ladite cavité interne (17a) en correspondance avec lesdites deux ouvertures latérales (16a et 16b).

5. Appareil de confinement selon la revendication 4, **caractérisé en ce que** ladite taille transversale maximale (D1) dudit élément de déplacement (14) est inférieure à un quart de la taille transversale (D2) de ladite cavité interne (17a) en correspondance avec lesdites deux ouvertures latérales (16a, 16b).

6. Appareil de confinement selon l'une quelconque des revendications précédentes, **caractérisé en ce que** le nombre desdites zones axiales (A, B, C, D, E, F, G) dudit arbre rotatif (15), qui correspond au nombre des roues (26), est compris entre 3 et 10.

7. Appareil de confinement selon l'une quelconque des revendications précédentes, **caractérisé en ce que** dans chaque roue (26), lesdites aubes (27) se ramifient radialement à partir d'un corps central (28) couplé coaxialement audit arbre rotatif (15).

8. Appareil de confinement selon l'une quelconque des revendications précédentes, **caractérisé en ce que** chacune desdites aubes (27) comprend une extrémité crochue (29), ayant une partie en saillie qui fait saillie tangentiellement dans la direction opposée à ladite direction de rotation déterminée dudit arbre rotatif (15).

9. Appareil de confinement selon l'une quelconque des revendications précédentes, **caractérisé en ce que** ledit arbre rotatif (15) a une forme sensiblement cylindrique, et la taille radiale desdites aubes (27) est constante, de sorte que lesdites cellules de confinement (30) sont toutes identiques.

10. Appareil de confinement selon l'une quelconque des revendications 1 à 8, **caractérisé en ce que** ledit arbre rotatif (15) a une section transversale qui varie le long dudit axe de rotation (Y), de sorte qu'étant donnée la même taille radiale desdites aubes (27), lesdites cellules de confinement (30) ont des volumes différents les unes des autres le long dudit axe de rotation (Y).

11. Appareil de confinement selon l'une quelconque des revendications précédentes, **caractérisé en ce qu'**il comprend au moins deux éléments de déplacement (14), chacun ayant un arbre rotatif respectif (15), chacun desdits arbres rotatifs (15) étant inséré dans des ouvertures latérales respectives (16a, 16b) de manière à passer à travers ladite cavité interne (17a) dudit récipient (11) de manière traversante, et **en ce que** les axes de rotation (Y) desdits arbres rotatifs (15) desdits au moins deux éléments de déplacement (14) est coplanaires et parallèles l'un à l'autre.

12. Appareil de confinement selon la revendication 11, **caractérisé en ce qu'**au moins une plaque de transport (32) est disposée au-dessus de chacun des espaces qui divisent lesdits au moins deux éléments de déplacement (14).

13. Appareil de confinement selon l'une quelconque des revendications précédentes, **caractérisé en ce que** ledit récipient (11) est un réacteur à réduction directe.

14. Appareil de confinement selon l'une quelconque des revendications 1 à 12, **caractérisé en ce que** ledit récipient (11) est un refroidisseur.
